# EUROPEAN PATENT APPLICATION

(11) **EP 2 503 777 A1**
(43) Date of publication of application: **26.09.2012**
(21) Application number: 12158796.8
(22) Date of filing: 09.03.2012
(51) Int. Cl.: H04N 5/44, H04N 21/426

(54) **Conditional access module, broadcast device and method thereof**

(30) Priority: 21.03.2011 TR 201102657
(71) Applicant: Vestel Elektronik Sanayi ve Ticaret A.S., 45030 Manisa (TR)
(72) Inventor: Church, Nick, Bristol BS16 SUE (GB)
(74) Representative: Cayli, Hülya

(57) **Abstract**

Present invention discloses a conditional access module (2) for a broadcast receiving device (1) having at least one common interface input (1a) comprising at least one common interface connector (8) wherein the module (2) further comprises means for generating at least a dummy video signal and the module (2) further comprises at least one video modulator (5) which converts said video signal to a broadcast signal and a broadcast output (2a) that is connected to said video modulator (5) and is arranged to output said broadcast signal. Within the present invention, the need to receive a signal by a device for using broadcast independent functions and/or services is eliminated.

## Description

### Related Technical Field

The present invention is related to a conditional access module (CAM), to broadcast devices and to a method of operating a CAM. In preferred embodiments, the present invention is related to CAMs operating in non-broadcast environments.

### Prior Art

Conditional Access Modules (CAM) are used in recent broadcast receiver devices such as televisions, set-top-boxes, digital video broadcast (DVB) receivers, for several purposes. Although the basic task of CAMs are to decode privileged broadcasts such as pay TV services, non-free-to-air broadcasts, several services can be provided with the utilization of CAMs.

Since CAMs use Common Interface (Cl) to communicate to broadcast device, which is also suitable for general purpose communication to CAMs and which can handle limitless operation, it has been a common and widespread application to enable broadcast to handle a new application by utilizing a CAM to provide suitable connectivity and compatibility. For instance, an offline television that is capable of only receiving terrestrial broadcasts can run an application similar to an Internet Protocol Television (IPTV), if it has a Cl input and a CAM with internet connectivity and TCP/IP compatibility. If the television does not use CAM, it may receive a broadcast signal on which an IPTV application broadcast is present but which it cannot handle. Using the CAM, it is possible and a common application to bring in visuals such as on screen displays to enable a user to configure an IPTV application and use the application, whenever the television is tuned to the related broadcast.

However, the standard CAM protocols require a direct link between the application for which the CAM is used and the broadcast. A CAM can only be designed or programmed to work with certain broadcasts. Thus, in the prior art, to enable CAM to operate, the only way is to tune the broadcast receiving device to a specific broadcast which CAM is designed to operate with.

As well as recent internet based applications for broadcast devices, different broadcast technologies and services have also been developed. Utilization of Cl and CAMs for the adaptation of broadcast devices has become important because of this development. However, as the CAMs require utilization of an ordinary broadcast to operate, it is necessary to reserve at least one broadcast channel for the service that is enabled for use with the CAM. Moreover, if an ordinary broadcast environment is not present, for instance, if a terrestrial broadcast is not present but an internet broadcast is to be received by a device using a CAM, it is impossible to receive the service even when the service CAM is present.

The patent document US 6040851 A discloses a conditional access module, which comprises a RF module for handling, processing and passing-through broadcast signals. The CAM may handle both network dependent and network independent functions. However the disclosed module is incapable of working without the existence of a broadcast signal even the function that is used is independent of the network.

### Brief Description of the Invention

Present invention discloses a conditional access module for a broadcast receiving device having at least one common interface input comprising at least one common interface connector, wherein the module further comprises means for generating at least a dummy video signal and the module further comprises at least one video modulator which converts said video signal to a broadcast signal, and a broadcast output that is connected to said video modulator and is arranged to output said broadcast signal.

Thus, the CAM can provide its own dummy broadcast signal to the device, e.g. a TV set, so that broadcast independent functions and/or services offered by the CAM can be used without the need for the device to receive a separate signal. Hence, broadcast independent services such as internet protocol television (IPTV) services or network independent functions can be used by the broadcast receiving device, which normally needs to receive a separate, terrestrial broadcast signal to utilize the module. This is easier and cheaper to deploy than providing a dedicated broadcast service for use with the CAM functionality.

### Object of the Invention

The object of the invention is to provide a conditional access module for a broadcast receiving device.

Another object of the invention is to provide a conditional access module which enables a broadcast receiving device without the existence of a broadcast signal.

Another object of the invention is to enable a broadcast receiving device to utilize broadcast independent functions without the need to a broadcast signal.

### Description of the Drawings

Embodiments of the conditional access module, broadcast device and method thereof are shown in annexed figures, wherein;
**Figure 1** shows a diagram of a broadcast receiving device using a conditional access module that is known from prior art.
**Figure 2** shows a diagram of a broadcast receiving device using an example of a conditional access module according to an embodiment of the present invention.
**Figure 3** shows a block diagram of the conditional access module of the present invention.

The reference numbers as used in figures may possess the following meanings;
- Broadcast receiving device: (1)
- Common Interface (Cl) input: (1a)
- Broadcast input: (1b)
- Conditional Access Module (Prior Art): (2')
- Conditional Access Module (Present invention): (2)
- Broadcast output: (2a)
- Service input: (2b)
- Service device: (3)
- Aerial: (4)
- Video modulator: (5)
- Video generator: (6)
- Controller: (7)
- Common Interface connector: (8)
- Service input controller: (9)

### Detailed Description of the Invention

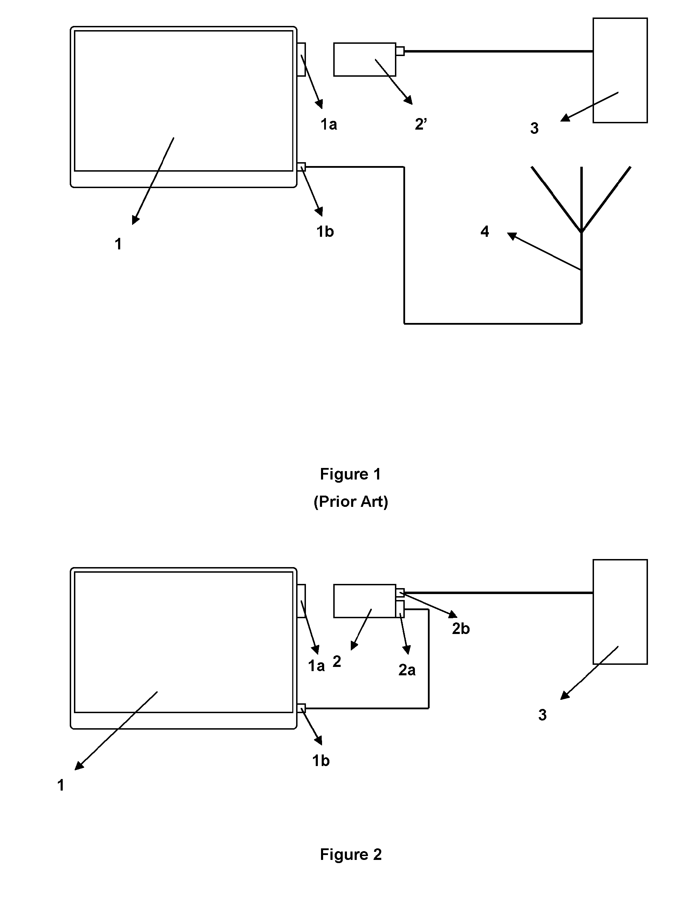

A broadcast receiving device (1) arranged to connect to a conditional access module (CAM) (2') that is known from the state of the art from a common interface (Cl) input (1a) is given in figure 1. Broadcast receiving devices (1) comprise at least a broadcast input (1 b) and require a broadcast signal that is supplied from for instance an aerial (4) to said broadcast input (1b). If a broadcast related to CAM (2') is present, CAM (2') is able to process the broadcast and enable the device (1) to use services provided by the CAM (2'). However, if a broadcast signal cannot be received via broadcast input (1b) by the device (1), it is impossible to use CAM (2') functions and services.

Figure 2 shows a broadcast receiving device (1) that is arranged to connect to conditional access module (CAM) (2) according to a preferred embodiment of the present invention. The CAM (2) comprises at least one broadcast output (2a) that is to be connected to broadcast input (1b) of the device (1). A broadcast signal is supplied to device (1) to enable the device to tune to a broadcast to use CAM (2) functions and services. To provide at least a dummy video signal to be broadcast, CAM (2) further comprises means for generating at least a dummy video signal.

The principle of the CAM (2) is to provide at least a dummy broadcast which is transmitted from broadcast output (2a) to the broadcast input (1b) of the device (1) so that the device (1) can tune to the broadcast and use CAM (2) functions and services. Utilization of dummy broadcast enables the device (1) to use CAM (2) functions and services even if a broadcast signal from a broadcast network is not present. Thus, the minimum broadcast requirement for device (1) to employ the functions and services of CAM (2) is also supplied from the CAM (2) itself. In effect, a loopback is created, as device (1) sends the dummy broadcast back to the CAM (2) whereupon the CAM (2) may determine that a function and/or a service of the CAM (2) is requested.

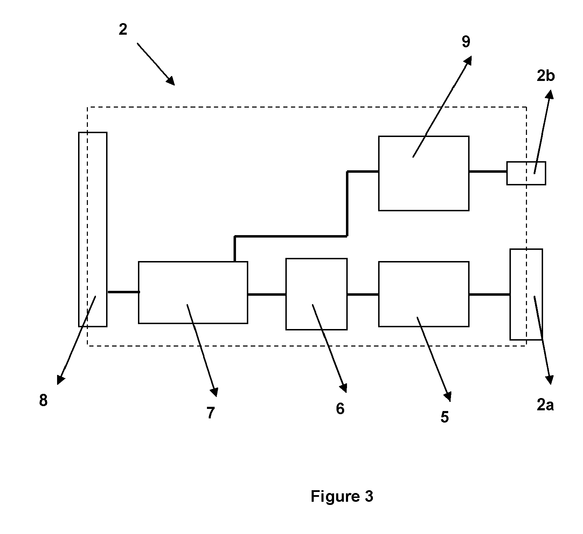

A block diagram of a CAM (2) is given in figure 3. The CAM comprises at least a video modulator (5) connected to broadcast output (2a) of the CAM (2). The CAM may further comprise a video generator (6) connected to video modulator (5). A dummy video signal is generated by the video generator (6) and the video modulator (5) converts the dummy video signal into a dummy broadcast signal that is passed, via the broadcast output (2a) to the device (1).

The CAM (2) may further enable the device (1) to connect to an external service, for instance a computer network based broadcast. For this purpose, the CAM (2) may comprise at least one service input (2b) that is to be connected to a service device (3) and/or service network. In an embodiment of the invention, the service input (2b) may be a network connector for instance and the CAM (2) may be connected to an internet protocol television (IPTV) server as the service device (3). Hence, an IPTV service can be enabled for a device (1), which does not have the capability to receive internet broadcasts, using the CAM (2) of the present invention.

Figure 3 shows an exemplary block diagram of the CAM (2) of the present invention. The CAM (2) may comprise a common interface (Cl) connector (8) that is connected to a controller (7). The controller (7) operates the CAM (2) to communicate to the device (1) through Cl (8) and also manages the functions and services enabled by the CAM (2).

As described above, the CAM (2) may further comprise a video generator (6) that generates a video signal and a video modulator (5) which converts the video signal to a broadcast signal. In one embodiment of the invention, the video generator (6) may not be provided. In this case, a simple video signal or blank signal may be generated instead by the controller (7) and the modulator (5) may still produce a broadcast signal that is to be sent to the device (1) via broadcast output (2a).

As stated above, the CAM (2) may further comprise a service input (2b) that is to be connected to a service device (3). A service input controller (9) may be comprised by the CAM (2) to handle the communications via service input (2b). The service input controller (9) may be connected to controller (2), video modulator (5) and/or video generator (6). The connection configuration may be arranged in accordance with utilization of the CAM (2). For instance, if a video stream is received via service input (2b) (for example an IPTV broadcast), the stream may be routed to video modulator (5) so that the stream is sent to device as if the stream is a terrestrial broadcast.

In a preferred embodiment, the CAM (2) may be arranged to receive a Cl+ card. The Cl+ card may contain for example a IPTV MHEG application that runs on MHEG engine provided by a suitable the Cl+ TV. The application communicates with CAM firmware to access and control remotely-hosted content over the IP connection. This provides the user with a selection of live and VOD TV services. The MHEG application will provide the UI, new/next and electronics program guides (EPGs), etc. The TV's native user interface and broadcast channel list is thus made largely redundant.

As described above, the CAM also has transmission circuitry in communication with the TV's broadcast input to provide a dummy broadcast signal, e.g. a DVT-T/T2/S/C service. The TV can be tuned to this service, e.g. on its first-time installation or an auto-setup service, or manually by the user. The dummy service is preferably blank, i.e. it has no video or audio, so it does not clash with the rest of the IPTV system.

Within the preferred embodiments of the present invention, the drawback of requiring a broadcast signal to use a CAM (2) service and/or function is eliminated. Consequently, the need to reserve a broadcast channel and to receive a broadcast signal via a broadcast input is eliminated.

Embodiments of the present invention have been described with particular reference to the example illustrated. However, it will be appreciated that variations and modifications may be made to the examples described within the scope of the present invention.

## Claims

1. A conditional access module (2) for a broadcast receiving device (1) having at least one common interface input (1a), the module (2) comprising at least one common interface connector (8) for connecting to the common interface input (1a),
- **characterized in that** the module (2) further comprises:
- means for generating at least a dummy video signal;
- at least one video modulator (5) arranged to convert said video signal to a broadcast signal; and,
- a broadcast output (2a) that is connected to said video modulator (5) and is arranged to output said broadcast signal.

2. A conditional access module (2) according to claim 1 **characterized in that** it further comprises a video generator (6) connected to video modulator (5) and arranged to generate said video signal.

3. A conditional access module (2) according to claim 1 **characterized in that** it further comprises a service input (2b) which is arranged to connect to a service device (3) and/or a service network.

4. A conditional access module (2) according to claim 3 **characterized in that** it further comprises a service input controller (9) connected to service input (2b) and arranged to handle communication via service input (2b).

5. A broadcast receiving device (1) in combination with a conditional access module (2) according to any of claims 1 to 4.

6. A method of operating a conditional access module (2) for a broadcast receiving device (1), the method comprising:
- generating at least a dummy video signal with the conditional access module;
- converting said video signal to a broadcast signal with the conditional access module;
- outputting said broadcast signal from the conditional access module to a broadcast receiving input of the broadcast receiving device; and,
- providing functions and/or services using the conditional access module to the broadcast receiving device over a common interface connector (8) connected to a common interface input (1a) of the broadcast receiving device.
